# FASCICULE DE BREVET EUROPEEN

(11) **EP 0 383 664 B1**
(45) Date de publication et mention de la délivrance du brevet: **07.09.1994**
(21) Numéro de dépôt: 90400373.8
(22) Date de dépôt: 12.02.1990
(51) Int. Cl.: B29C 47/12, B29D 28/00

(54) **Dispositif pour la réalisation de grillages comportant des ajourages ou évidements répartis sur leur surface**
Vorrichtung zur Herstellung von Gitterstrukturen, die über ihre Fläche verteilte Öffnungen oder Vertiefungen haben
Apparatus for manufacturing nettings with perforations or hollows distributed over their surfaces

(30) Priorité: 13.02.1989 FR 8901827
(43) Date de publication de la demande: 22.08.1990
(73) Titulaire: Hureau, Jacques, F-72600 Mamers (FR)
(72) Inventeur: Hureau, Jacques, F-72600 Mamers (FR)
(74) Mandataire: Wagret, Frédéric

(56) Documents cités:
- EP-A- 0 109 470
- FR-A- 2 131 842
- FR-A- 2 160 270
- FR-A- 2 161 842
- FR-A- 2 349 432
- FR-A- 2 572 991
- FR-A- 2 584 651
- US-A- 3 841 815

## Description

La présente invention concerne la fabrication d'un grillage réalisé par extrusion d'une structure en matière synthétique à partir d'une filière circulaire.

On a décrit, par exemple dans FR-A-2.584.651, des procédés dans lesquels la filière extrude un film initialement en forme de tube plein et qui subit l'action d'organes tels que peignes ou dents venant perforer à intervalles la surface du film. Après étirement et élongation, le film forme un grillage avec des évidements répartis sur sa surface.

On connaît notamment d'après US-A-3.841.815, une tête d'extrusion comportant une fente d'extrusion définie entre deux parois circulaires, une roue circulaire constamment excentrée et animée d'un mouvement de nutation suivant un axe colinéaire à la fente circulaire d'extrusion venant s'appuyer contre la paroi extérieure de la tête.

Dans ces conditions, la roue intérieure vient porter sur la paroi extérieure de la fente d'extrusion en suivant un parcours circulaire, de sorte que le point de contact entre la roue intérieure excentrée et animée du mouvement de nutation et la paroi extérieure se déplace (régulièrement de préférence) et dans le même sens le long de cette paroi extérieure.

Dans ce dispositif connu, la roue comporte des indentation sur sa périphérie, qui viennent porter sur le film en appui sur la paroi extérieure, de sorte que des perforations sont ensuite agrandies par étirement pour réaliser une structure lacunaire.

Selon un autre dispositif connu, les indentations sont prévues sur la paroi extérieure de la fente d'extrusion tandis que la roue centrale qui présente un bord circulaire appuie le film sur les indentations de cette paroi extérieure en y provoquant des ajourages ou évidements.

Par ailleurs, FR-A-2.161.842 décrit un dispositif d'extrusion de grillage qui correspond au préambule de la revendication 1.

Dans certaines conditions, le film thermoplastique sortant de la fente dans un état plastique peut venir s'appliquer sur la paroi extérieure de la fente d'extrusion sur laquelle vient porter la roue dentée intérieure.

Alors, le film a tendance à adhérer à cette paroi et ne s'en décolle que par l'appel ultérieur du grillage. Des mouvements d'adhérence et de décollement par zone du film provoquent par conséquent des à-coups qui le déforment et lui donnent un aspect irrégulier.

Pour des débits lents, le mouvement de la matière peut suivre les distorsions liées aux adhérences décrites ci-dessus. Par contre, ce défaut est d'autant plus marqué que les cadences de production sont élevées, et pour certaines qualités ou mélange de matière plastique.

L'invention a pour but de pallier notamment ces inconvénients des dispositifs connus.

A cet effet, l'invention a pour objet un dispositif pour la fabrication d'un film tubulaire extrudé depuis une fente circulaire d'extrusion et recevant une suite de perforations disposées selon un parcours hélicoïdal le long des parois du film tubulaire, ce dernier étant à cet effet extrudé par passage entre deux couronnes circulaires non concentriques dont une couronne extérieure constituant la paroi extérieure de la fente d'extrusion et une couronne intérieure, l'une des deux couronnes étant mobile et animée d'un mouvement de nutation autour d'un axe colinéaire à l'axe de la couronne fixe, le mouvement de la couronne circulaire mobile l'amenant au contact permanent de la paroi de la couronnes fixe selon un point de contact qui se déplace continuellement sur le pourtour de la couronne fixe, une des couronnes comportant sur sa face en contact avec l'autre couronne des indentations propres à perforer le film dans la zone de contact entre les deux couronnes, caractérisé en ce que les couronnes sont disposées de telle façon l'une par rapport à l'autre que l'action d'incision et de perforation de la couronne mobile, coopérant avec la couronne fixe, s'opère immédiatement en aval de la fente d'extrusion et la portée de la couronne mobile sur la couronne fixe se fait selon une ligne de contact confondue avec l'angle inférieur et intérieur ou extérieur de ladite couronne fixe.

Dans ce dispositif on évite ainsi que le film soit repoussé et plaqué, venant en position d'adhérence, sur la paroi de la couronne fixe.

L'action de la couronne mobile vient donc repousser le film pour permettre l'incision du film par le jeu des indentations (disposées soit sur la couronne fixe, soit sur la couronne mobile), mais sans provoquer l'appui du film en aval de l'incision sur une paroi appui qui en raison de la nature encore plastique du film récemment extrudé, provoquerait l'adhérence du film sur la paroi d'appui.

Selon une première variante de l'invention, la couronne intérieure est mobile et animée d'un mouvement de nutation l'amenant au contact du pourtour intérieur circulaire de la couronne extérieure fixe selon un point de contact se déplaçant le long de ce pourtour circulaire.

Selon une seconde variante de l'invention, la couronne extérieure est mobile et animée d'un mouvement de nutation autour de la couronne centrale fixe.

De plus, suivant un mode de réalisation, les indentations sont disposées sur la couronne intérieure mobile et elles sont orientées dans une direction centrifuge vers la couronne fixe.

Sinon, il est possible que les indentations soient disposées sur la couronne extérieure fixe et soient orientées dans une direction centripède vers la couronne mobile centrale ou intérieure.

Le dispositif peut comporter une fente de précalibrage permettant de déterminer l'épaisseur du film, cette fente étant disposée en amont de la fente d'extrusion.

Suivant un mode de réalisation, la fente de précalibrage est obtenue par la mise en place d'une bague concentrique susceptible d'être ajustée en position autour du noyau central depuis l'extérieur par un jeu de vis radiales.

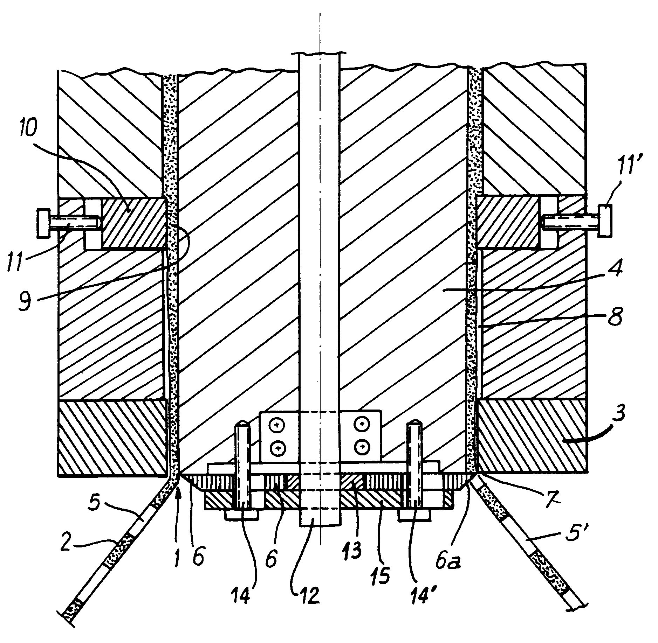

D'autres caractéristiques et avantages de l'invention ressortiront de la description qui suit et qui est donnée en rapport avec une forme de réalisation présentée à titre d'exemple non limitatif en se référant à la figure unique des dessins annexés.

Dans le dispositif selon l'invention et tel que représenté à la figure annexée la fente d'extrusion 1 permettant l'écoulement du film de matière synthétique 2 est définie par l'espace entre une couronne fixe extérieure 3 et le cylindre central 4. Dans l'exemple de la figure unique les perforations 5,5' sont obtenues par le jeu de la couronne dentée 6 qui se déplace selon un mouvement de nutation précédemment décrit de sorte que cette couronne soit constamment excentrée par rapport à la fente d'extrusion ; un bord de la couronne dentée est donc constamment en position d'interruption partielle en travers de la fente d'extrusion ; mais ce bord d'interruption se déplace régulièrement et selon un mouvement continu le long de la fente.

Ainsi et de façon connue sont provoquées des perforations dans le film, perforations qui suivent un parcours hélicoïdal le long de la structure tubulaire extrudée.

Dans le cadre de la présente invention les indentations 6a de la couronne dentée sont prévues pour venir face à l'angle 7 correspondant à l'angle intérieur et inférieur de la couronne fixe 3.

De sorte que la couronne 3 s'arrête exactement au niveau de la fente d'extrusion 1 ; et le film dégagé de la fente d'extrusion et subissant l'action des indentations 6a n'est donc plus repoussé contre la paroi de la couronne fixe 3 laquelle s'arrête exactement au niveau de la fente d'extrusion, selon l'angle inférieur extérieur 7.

On évite ainsi le phénomène d'adhérence du film 2 contre la partie inférieure de la paroi de la couronne 3, partie inférieure qui est ici inexistante.

Selon une autre forme de réalisation non représentée aux dessins, les indentations pourraient être présentes précisément au niveau de l'angle intérieur et inférieur 7 de la couronne 3 et recevoir l'appui de la couronne mobile intérieure 6 laquelle offrirait un bord circulaire continu venant alors coopérer avec les indentations de la couronne fixe pour obturer passagèrement la zone de la fente d'extrusion dans laquelle la couronne mobile vient au contact de la couronne fixe ; cette zone d'obturation se déplaçant avec le mouvement de nutation de la couronne intérieure mobile.

Selon une autre caractéristique de l'invention on voit que le passage 8 antérieur à la fente d'extrusion et dans lequel circule la matière à l'état plastique préalablement à l'extrusion, reçoit une fente de précalibrage 9 constituée par la bague réglable 10 insérée autour du noyau central 4.

Et la fente de précalibrage est ainsi obtenue par la mise en place d'une bague concentrique susceptible d'être ajustée en position depuis l'extérieur par un jeu de vis radiales 11,11′.

On obtient ainsi un ajustement très précis de l'épaisseur du film préalablement à son passage dans la fente d'extrusion définitive ce qui permet d'obtenir une parfaite régularité dans le film en évitant une déformation postérieure à l'extrusion consécutive au relâchement des contraintes internes et à la décompression de ce film au sortir de la filière d'extrusion.

Dans l'exemple représenté, l'entraînement de la roue dentée 6 se fait depuis l'arbre central 12 qui entraîne la came circulaire excentrée 13 ; et cette dernière provoque donc le mouvement de nutation subi par la roue dentée 6, maintenue par la plaque inférieure et les plots 14,14′ solidaires du corps central 4.

On comprend que le mouvement de mutation, selon une nouvelle variante pourrait être imprimé non pas à la couronne centrale 6 mais à la couronne extérieure 3 ; dans ce cas la couronne centrale 6 est fixe et elle définit le bord intérieur de la fente d'extrusion dont la couronne extérieure définit le bord externe ; et cette couronne extérieure est alors mue par un mécanisme d'entraînement dans un mouvement de mutation, tel que la couronne extérieure soit constamment en contact avec la couronne intérieure selon un point de contact se déplaçant de façon continue le long de la fente d'extrusion.

## Revendications

1. Dispositif pour la fabrication d'un film tubulaire (2) extrudé depuis une fente circulaire d'extrusion (1), et recevant une suite de perforations (5,5') disposées selon un parcours hélicoïdal le long des parois du film tubulaire, ce dernier étant à cet effet extrudé par passage entre deux couronnes circulaires non concentriques dont une couronne extérieure (3) constituant la paroi extérieure de la fente d'extrusion et une couronne intérieure (6), l'une des deux couronnes étant mobile et animée d'un mouvement de nutation autour d'un axe colinéaire à l'axe de la couronne fixe, le mouvement de la couronne circulaire mobile l'amenant au contact permanent de la couronne fixe selon un point de contact qui se déplace continuellement sur le pourtour de la couronne fixe, une des couronnes comportant sur sa face en contact avec l'autre couronne des indentations propres à perforer le film dans la zone de contact entre les deux couronnes, caractérisé en ce que les couronnes sont disposées de telle façon l'une par rapport à l'autre que l'action d'incision et de perforation de la couronne mobile, coopérant avec la couronne fixe, s'opère immédiatement en aval de la fente d'extrusion (1) et la portée de la couronne mobile (6) sur la couronne fixe (3) se fait selon une ligne de contact confondue avec l'angle inférieur et intérieur (7) ou extérieur de ladite couronne fixe (3).

2. Dispositif selon la revendication 1, caractérisé en ce que la couronne intérieure (6) est mobile et animée d'un mouvement de nutation l'amenant au contact du pourtour intérieur circulaire de la couronne extérieure fixe (3) selon un point de contact se déplaçant le long de ce pourtour circulaire.

3. Variante du dispositif selon la revendication 1, caractérisée en ce que la couronne extérieure est mobile et animée d'un mouvement de nutation autour de la couronne centrale fixe.

4. Dispositif selon la revendication 2, caractérisé en ce que les indentations sont disposées sur la couronne intérieure mobile (6) et elles sont orientées dans une direction centrifuge vers la couronne fixe (3).

5. Dispositif selon la revendication 2, caractérisé en ce que les indentations sont disposées sur la couronne extérieure fixe et elles sont orientées dans une direction centripède vers la couronne mobile centrale ou intérieure.

6. Dispositif selon l'une des revendications 1 à 5, caractérisé en ce qu'il comporte une fente de précalibrage (9) permettant de déterminer l'épaisseur du film, cette fente étant disposée en amont de la fente d'extrusion.

7. Dispositif selon la revendication 6, caractérisé en ce que la fente de précalibrage (9) est obtenue par la mise en place d'une bague concentrique (10) susceptible d'être ajustée en position autour du noyau central (4) depuis l'extérieur par un jeu de vis radiales (11, 11').

## Claims

1. Apparatus for manufacturing a tubular film (2) extruded from a circular extrusion slot (1), and receiving a series of perforations (5, 5') disposed in a helicoidal path along the walls of the tubular film, this latter being to that end extruded by passage between two non-concentric circular rings, viz. an outer ring (3) constituting the outer wall of the extrusion slot and an inner ring (6), one of the two rings being mobile and animated by a movement of nutation about an axis colinear to the axis of the fixed ring, the movement of the mobile circular ring bringing it in permanent contact with the fixed ring at a point of contact which moves continually on the periphery of the fixed ring, one of the rings comprising on its face in contact with the other ring, indentations adapted to perforate the film in the zone of contact between the two rings, characterized in that the rings are disposed one with respect to the other so that the action of incision and of perforation of the mobile ring, cooperating with the fixed ring, is effected immediately downstream of the extrusion slot (1) and the bearing of the mobile ring (6) on the fixed ring (3) is made along a line of contact merged with the lower and inner (7) or outer angle of said fixed ring (3).

2. Apparatus according to Claim 1, characterized in that the inner ring (6) is mobile and animated by a movement of nutation bringing it in contact with the circular inner periphery of the fixed outer ring (3) at a point of contact moving along this circular periphery.

3. Variant of the apparatus of Claim 1, characterized in that the outer ring is mobile and animated by a movement of nutation about the fixed central ring.

4. Apparatus according to Claim 2, characterized in that the indentations are disposed on the mobile inner ring (6) and they are oriented in a centrifugal direction towards the fixed ring (3).

5. Apparatus according to Claim 2, characterized in that the indentations are disposed on the fixed outer ring and they are oriented in a centripetal direction towards the central or inner mobile ring.

6. Apparatus according to one of Claims 1 to 5, characterized in that it comprises a pre-calibration slot (9) determining the thickness of the film, this slot being disposed upstream of the extrusion slot.

7. Apparatus according to Claim 6, characterized in that the pre-calibration slot (9) is obtained by positioning a concentric collar (10) capable of being adjusted in position around the central core (4) from the outside by a set of radial screws (11, 11').

## Patentansprüche

1. Vorrichtung zur Herstellung einer über einen ringförmigen Extrusionsspalt (1) extrudierten röhrenförmigen Folie (2), wobei im Anschluß an das Extrudieren die röhrenförmige Folie (2) mit Perforationen (5, 5') versehen wird, die spiralförmig in ihr angebracht sind, zu welchem Zweck die Folie zwischen zwei nicht konzentrisch zu einander angeordneten kreisförmigen Ringen extrudiert wird, nämlich einem die Außenwand des Extrusionsspaltes bildenden äußere Ring (3) und einem innere Ring (6), wobei einer der beiden Ringe beweglich ist und sich in einer Taumelbewegung um eine in Bezug auf die Achse des feststehenden Ringes gleichgerichtete Achse bewegt, sodaß die Bewegung des beweglichen Ringes diesen ständig in Berührung mit dem feststehenden Ring bringt und sich der Berührungspunkt ständig auf der Umfangslinie des feststehenden Rings bewegt, wobei einer der beiden Ringe auf der Berührungsfläche mit dem anderen Ring zugewandten Seite Auszahnungen aufweist, mit denen die Folie im Berührungsbereich zwischen den beiden Ringen perforiert wird, dadurch gekennzeichnet, daß die beiden derart in Bezug aufeinander angeordnet sind, daß die Einschneid- und Perforierbewegung des beweglichen Ringes im Zusammenwirken mit dem feststehenden Ring direkt hinter dem Extrusionsspalt (1) erfolgt und sich der Wirkbereich des beweglichen Ringes (6) gegenüber dem feststehenden Ring (3) auf einer Berührungslinie befindet, die der unteren Innenkante (7) bzw. Außenkante des feststehenden Ringes (3) entspricht.

2. Vorrichtung nach Patentanspruch 1, dadurch gekennzeichnet, daß der Innenring (6) beweglich ausgelegt und in eine Taumelbewegung versetzt ist, sodaß diese Bewegung ihn ständig in Berührung mit dem feststehenden Außenring (3) bringt und sich der Berührungspunkt ständig auf dieser Umfangslinie bewegt.

3. Variante nach Patentanspruch 1, dadurch gekennzeichnet, daß der Außenring (3) beweglich ausgelegt und in eine Taumelbewegung um den feststehenden Innenring (6) versetzt ist.

4. Vorrichtung nach Patentanspruch 2, dadurch gekennzeichnet, daß die Auszahnungen auf dem beweglichen Innenring (6) angebracht und in zentrifugaler Richtung in Bezug auf den feststehenden Außenring (3) angeordnet sind.

5. Vorrichtung nach Patentanspruch 2, dadurch gekennzeichnet, daß die Auszahnungen auf dem feststehenden Außenring (3) angebracht und in zentripetaler Richtung in Bezug auf den beweglichen Zentral- oder Innenring (6) angeordnet sind.

6. Vorrichtung nach Patentanspruch 1 bis 5, dadurch gekennzeichnet, daß sie einen Vorkalibrierspalt (9) aufweist, mit dem die Folienstärke eingestellt werden kann, wobei sich der Vorkalibrierspalt vor dem Extrudierspalt befindet.

7. Vorrichtung nach Patentanspruch 6, dadurch gekennzeichnet, daß der Vorkalibrierspalt (9) durch das Einsetzen eines konzentrischen Ringes (10) erfolgt, dessen Abstand vom zentralen Kern (4) durch einen Satz radialer Schrauben (11, 11') verstellt werden kann.
